# EUROPEAN PATENT SPECIFICATION

(11) **EP 4 208 752 B1**
(45) Date of publication and mention of the grant of the patent: **07.08.2024**
(21) Application number: 22721434.3
(22) Date of filing: 22.04.2022
(51) Int. Cl.: G02C 7/04

(54) **CONTACT LENSES FOR USE IN PREVENTING OR SLOWING THE DEVELOPMENT OR PROGRESSION OF MYOPIA AND RELATED METHODS**
KONTAKTLINSEN ZUR VERWENDUNG BEI DER VORBEUGUNG ODER VERLANGSAMUNG DER ENTWICKLUNG ODER DES FORTSCHREITENS VON MYOPIE UND ZUGEHÖRIGE VERFAHREN
LENTILLES DE CONTACT DESTINÉES À ÊTRE UTILISÉES DANS LA PRÉVENTION OU LE RALENTISSEMENT DU DÉVELOPPEMENT OU DE LA PROGRESSION DE LA MYOPIE ET PROCÉDÉS ASSOCIÉS

(30) Priority: 29.04.2021 US 202163181247 P
(43) Date of publication of application: 12.07.2023
(60) Divisional application: 24182365.7
(73) Proprietor: CooperVision International Limited, Fareham PO15 5RL (GB)
(72) Inventor: CHAMBERLAIN, Paul, Pleasanton, California 94588 (US); BRADLEY, Arthur, Pleasanton, California 94588 (US); ARUMUGAM, Baskar, Pleasanton, California 94588 (US); WEBBER, Martin, Eastleigh Hampshire SO53 4LY (GB); HAMMOND, David S, Pleasanton, California 94588 (US)
(74) Representative: Abel & Imray LLP
(86) International application number: PCT/GB2022/051022
(87) International publication number: WO 2022/229606

(56) References cited:
- EP-A1- 3 514 613
- WO-A1-2012/012826
- WO-A1-2019/102415
- WO-A1-2021/056058
- WO-A1-2021/056059
- CN-A- 107 861 262

## Description

The present disclosure concerns contact lenses for use in preventing or slowing the development or progression of myopia by targeting treatment at regions of the retina. The present disclosure also concerns methods of manufacturing such lenses and methods of using such lenses.

### Background

Myopia (short-sightedness) affects a significant number of people including children and adults. Myopic eyes focus incoming light from distant objects to a location in front of the retina. Consequently, the light converges towards a plane in front of the retina and diverges towards, and is out of focus upon arrival at, the retina. Conventional lenses (e.g. spectacle lenses and contact lenses) for correcting myopia reduce the convergence (for contact lenses), or cause divergence (for spectacle lenses) of incoming light from distant objects before it reaches the eye, so that the location of the focus is shifted onto the retina.

It was suggested several decades ago that progression of myopia in children or young people could be slowed or prevented by under-correcting, i.e. moving the focus towards but not quite onto the retina. However, that approach necessarily results in degraded distance vision compared with the vision obtained with a lens that fully corrects for any myopia. Moreover, it is now regarded as doubtful that under-correction is effective in controlling developing myopia. A more recent approach is to provide lenses having both regions that provide full correction of distance vision and regions that under-correct, or deliberately induce, myopic defocus. It has been suggested that this approach can prevent or slow down the development or progression of myopia in children or young people, whilst providing good distance vision. The regions that provide full-correction of distance vision are usually referred to as base-power regions and the regions that provide under-correction or deliberately induce myopic defocus are usually referred to as add power regions or myopic defocus regions (because the dioptric power is more positive, or less negative, than the power of the distance regions).

A surface (typically the anterior surface) of the add power region(s) has a smaller radius of curvature than that of the distance power region(s) and therefore provides a more positive or less negative power to the eye. The add power region(s) are designed to focus incoming parallel light (i.e. light from a distance) within the eye in front of the retina (i.e. closer to the lens), whilst the distance power region(s) are designed to focus light and form an image at the retina (i.e. further away from the lens).

A dual-focus contact lens is available under the name of MISIGHT (CooperVision, Inc.) that is different than bifocal or multifocal contact lenses configured to improve the vision of presbyopes, in that the dual-focus lens is configured with certain optical dimensions to enable a person who is able to accommodate to use the distance correction (i.e. the base power) for viewing both distant objects and near objects. The treatment zones of the dual-focus lens that have the add power also provide a myopically defocused image at both distant and near viewing distances for foveal and peripheral areas of the retina.

Whilst these lenses have been found to be beneficial in preventing or slowing down the development or progression of myopia, annular add power regions can give rise to unwanted visual side effects. Light that is focused by the annular add power regions in front of the retina diverges from the focus to form a defocused annulus at the retina. Wearers of these lenses therefore may see a ring or 'halo' surrounding images that are formed on the retina, particularly for small bright objects such as street lights and car headlights. Also, rather than using the natural accommodation of the eye (i.e. the eye's natural ability to change focal length) to bring nearby objects into focus, in theory, wearers can make use of the additional focus in front of the retina that results from the annular add power region to focus near objects; in other words, wearers can inadvertently use the lenses in the same manner as presbyopia correction lenses are used, which is undesirable for young subjects.

Further lenses have been developed which can be used in the treatment of myopia, and which are designed to eliminate the halo that is observed around focused distance images in the MISIGHT (CooperVision, Inc.) lenses and other similar lenses described above. In these lenses, the annular region is configured such that no single, on-axis image is formed in front of the retina, thereby preventing such an image from being used to avoid the need for the eye to accommodate near targets. Rather, distant point light sources are imaged by the annular region to a ring-shaped focal line at a near add power focal surface, leading to a small spot size of light, without a surrounding 'halo' effect, on the retina at a distance focal surface.

The present disclosure provides improved lenses for use in young subjects that prevent or slow worsening of myopia.

The following patent applications disclose lenses of the prior art: WO 2012/012826 A1, WO 2021/056059 A1, WO 2019/102415 A1, EP 3 514 613 A1, CN 107 861 262 A and WO 2021/056058 A1.

According to a first aspect, the present disclosure provides a contact lens for use in preventing or slowing the development or progression of myopia. The lens includes an optic zone and a peripheral zone surrounding the optic zone. The peripheral zone has a variation in thickness configured to control rotation of the lens. The optic zone comprises a central region, the central region having a base power provided by at least one surface having a curvature. The central region thereby focuses light from distant point objects to a distal focal surface, said light forming a blur circle or ellipse as it passes through a proximal focal surface. The optic zone comprises an annular region that circumferentially surrounds the central region. The annular region includes an add power region having an add power provided by at least one surface having a curvature, the add power being 0.5 D or more, and the area of the add power region being less than 75% of the area of the annular region. A series of points defining centres of curvature of the add power region form a segment of an annulus. The add power region thereby focuses light from distant point objects to form a focused arc at the proximal focal surface.

According to a second aspect, the present disclosure provides a method of manufacturing a contact lens. The method comprises forming a contact lens. The lens includes an optic zone and a peripheral zone surrounding the optic zone. The peripheral zone has a variation in thickness configured to control rotation of the lens. The optic zone comprises a central region, the central region having a base power provided by at least one surface having a curvature. The central region thereby focuses light from distant point objects to a distal focal surface, said light forming a blur circle or ellipse as it passes through a proximal focal surface. The optic zone comprises an annular region that circumferentially surrounds the central region. The annular region includes an add power region having an add power provided by at least one surface having a curvature, the add power being 0.5 D or more, and the area of the add power region being less than 75% of the area of the annular region. A series of points defining centres of curvature of the add power region form a segment of an annulus. The add power region thereby focusing light from distant point objects to form a focused arc at the proximal focal surface.

The present disclosure provides, according to a third aspect, a method of reducing progression of myopia. The method comprises providing a multifocal ophthalmic lens according to the first aspect to a myopic person who is able to accommodate for varying near distances.

It will of course be appreciated that features described in relation to one aspect of the present disclosure may be incorporated into other aspects of the present disclosure. For example, the method of the disclosure may incorporate features described with reference to the apparatus of the disclosure and vice versa.

### Description of the Drawings

Fig. 1 is a schematic diagram showing visual fields of the eye divided into quadrants;

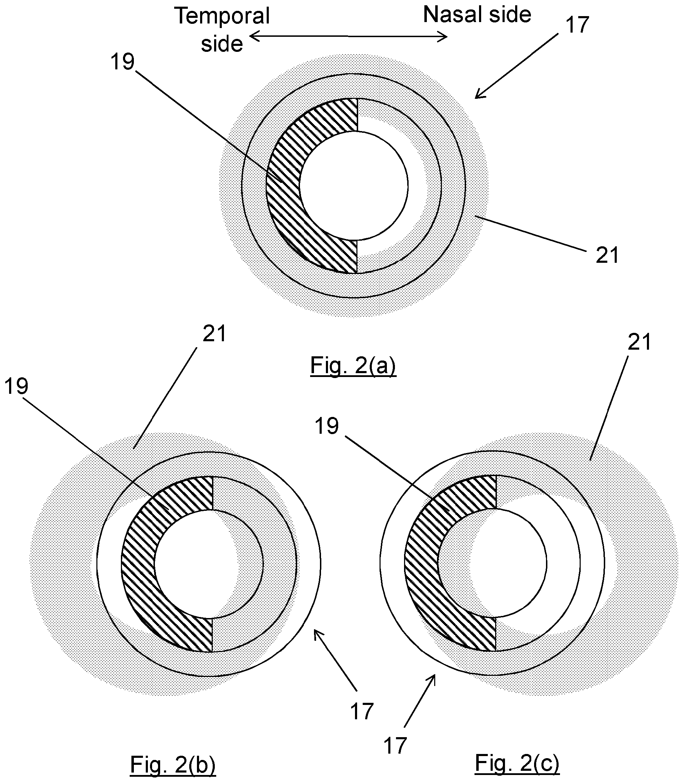

Fig. 2(a)-(c) is a schematic diagram showing the effect of parallax between the lens and the lens wearer's pupil;
Fig. 3(a) is a schematic top view of a lens having an annular region, wherein the annular region comprises an add power region that is approximately 50% of the area of the annular region, according to an embodiment of the present disclosure;
Fig. 3(b) is a schematic top view of a lens having an annular region, wherein the annular region comprises an add power region that occupies the opposite half of the annular region compared to the lens of Fig. 3(a);
Fig. 4 is a schematic cross-section through the lens of Fig. 3(a) taken along the line A-A;
Figs. 5(a)-(d) are schematic top views of lenses having annular regions comprising add power regions that span approximately 25% of the area of the annular regions, wherein the add power region of each lens spans a different quadrant, according to embodiments of the present disclosure;
Fig. 6(a) is a schematic top view of a lens having an annular regions comprising an add power region that spans approximately 25% of the area of the annular regions, wherein the add power region has an asymmetric power profile, according to embodiments of the present disclosure;
Fig. 6(b) is a graph showing the asymmetric power profile of the annular region of the lens of Fig. 6(a);
Fig. 7 is a schematic top view of a lens having an annular region, wherein the annular region comprises two add power regions, each spanning approximately 25% of the area of the annular region, and each having the same add power, according to an embodiment of the present disclosure;
Fig. 8 is a schematic cross-section through the lens of Fig. 7 taken along the line B-B;
Fig. 9 is a schematic cross-section through the lens of Fig. 7 taken along the line C-C;
Fig. 10 is a schematic top view of a lens having an annular region, wherein the annular region comprises two adjacent add power regions, each spanning approximately 25% of the area of the annular region, and each having a different add power, according to an embodiment of the present disclosure;
Fig. 11 is a schematic top view of a lens having an annular region, wherein the annular region comprises two non-adjacent add power regions, each spanning approximately 25% of the area of the annular region, and each having a different add power, according to an embodiment of the present disclosure;
Fig. 12 is a schematic cross-section through the lens of Fig. 11 taken along the line D-D;
Fig. 13 is a schematic top view of a lens having an annular region, wherein the annular region comprises adjacent add power regions, each spanning approximately 1/8 of the area of the annular region, and each having a different add power, according to an embodiment of the present disclosure; and
Fig. 14 is a schematic top view of a lens having a two concentric annular regions, wherein each concentric annular region comprises an add power region, according to an embodiment of the present disclosure.

### Detailed Description

According to a first aspect, the present disclosure provides a contact lens for use in preventing or slowing the development or progression of myopia. The lens includes an optic zone and a peripheral zone surrounding the optic zone. The peripheral zone has a variation in thickness configured to control rotation of the lens. The optic zone comprises a central region, the central region having a base power provided by at least one surface having a curvature. The central region thereby focuses light from distant point objects to a distal focal surface, said light forming a blur circle or ellipse as it passes through a proximal focal surface. The optic zone comprises an annular region that circumferentially surrounds the central region. The annular region includes an add power region having an add power provided by at least one surface having a curvature, the add power being 0.5 D or more, and the area of the add power region being less than 75% of the area of the annular region. A series of points defining centres of curvature of the add power region form a segment of an annulus. The add power region thereby focusing light from distant point objects to form a focused arc at the proximal focal surface.

As an on-axis image will not be formed by light passing through the add power region, a wearer of the lens will therefore need to use the natural accommodation of their eye to bring nearby objects into focus.

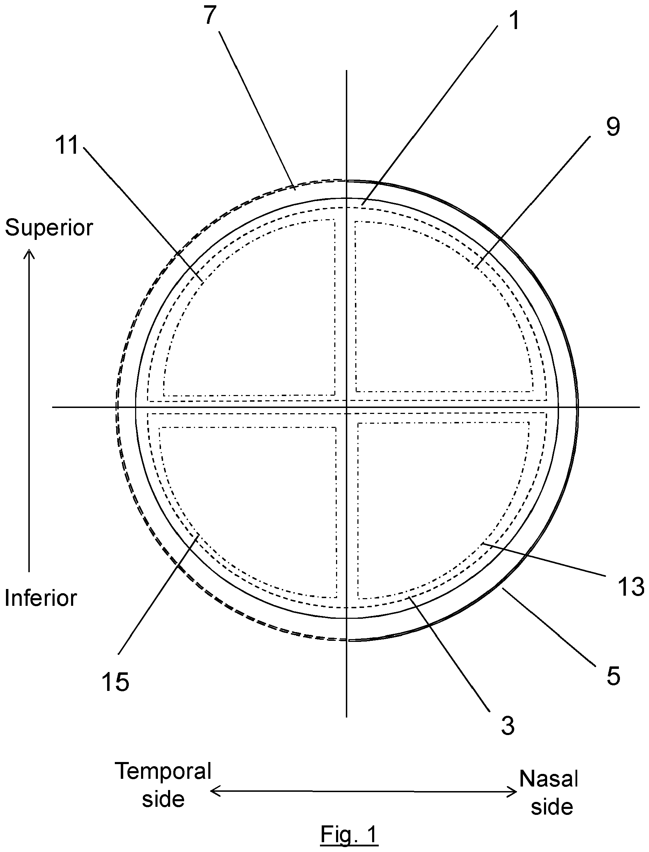

The visual fields of the eye can be divided into quadrants, as shown in Fig. 1, and these quadrants can also be used to describe the quadrants of a contact lens when positioned on an eye. The upper half of the eye/lens is the superior half 1, and the lower half is the inferior half 3. The visual field that is closest to the nose is the nasal half 5, and the visual field that is furthest from the nose is the temporal half 7. Four quadrants can therefore be defined as superior-nasal 9, superior-temporal 11, inferior-nasal 13 and inferior-temporal 15. In the description below, these definitions will be used to describe the position of the add power region and the variation in thickness of the peripheral region as they would be when the lens is in normal use and is being worn by a wearer.

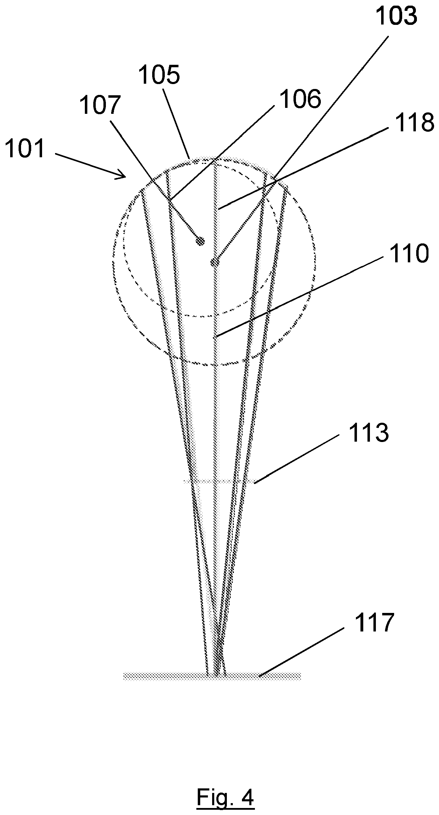

For off-axis light that falls incident on lenses according to embodiments of the present disclosure, there is an approximate mapping of light to each quadrant of the lens wearer's visual field to the opposite quadrant of the retina. Axial separation between the lens when positioned on the anterior surface of the cornea and the position of the wearer's pupil results in parallax, shifting the relative position of the lens and the pupil as viewing angle changes, or as the direction of light incident on the lens changes. This is shown, by way of example, in Figs. 4(a)-(c), which shows a lens 17 according to an embodiment of the present disclosure, having a add power region 19 that spans approximately half of the annular region (the temporal half). The iris 21 is shown schematically as it would be viewed through the cornea. As shown in Fig. 4(b), the add power region 19 will alter the path of light that is being imaged from the wearer's right visual field, but, as shown in Fig. 4(c), the add power region 19 will not affect light that is being imaged from the wearer's left visual field. Light from the wearer's left visual field that has passed through the add power zone 19 will be blocked by the iris 21. For this lens 17, to a first approximation, the add power zone 19 will change the focus of light that falls incident on the left retina (nasal retina of the right eye, temporal retina of the left eye), but will not shift the focus of light that falls incident on the right retina (temporal retina of the right eye, nasal retina of the left eye). It will be apparent that if the add power zone spanned the nasal half of the lens instead of the temporal half, the lens would alter the focus of light falling incident on the right (temporal) retina, but would not alter the focus of light falling incident on the left (nasal) retina. By including the add power region 17 in an annular region of the lens, contrast attenuation can be targeted at a peripheral retinal region whilst minimally disrupting foveal vision.

It has been observed that certain regions of the retina will typically experience more or less hyperopic defocus, which leads to the progression or worsening of myopia. In some eyes, the temporal half of the retina experiences less hyperopic defocus than the nasal half of the retina. Therefore, it may be beneficial to provide targeted add power that will influence light rays that are focused towards a specific region of the retina. For example, it may be beneficial to provide a lens having an add power region that spans a temporal half of the lens, such that the add power region changes the focus of light rays that are incident on the nasal half of the retina. This may enable lenses to provide targeted treatment towards regions of the retina that experience more hyperopic defocus. It will be appreciated that for a right eye lens, the temporal half of the lens is the right hand side of the lens (from the wearer's perspective), and for a left hand lens, the temporal half of the lens is the left hand side of the lens (from the wearer's perspective), and therefore in order to provide targeted add power towards a wearer's nasal retinas, it may be beneficial to provide a right eye lens and a left eye lens that have add-power regions in opposite positions.

As used herein the term distant point objects is used when describing an object that is located sufficiently far away from the lens for light rays from the object to be parallel when they reach the lens.

As used herein, the term contact lens refers to an ophthalmic lens that can be placed onto the anterior surface of the eye. It will be appreciated that such a contact lens will provide clinically acceptable on-eye movement and not bind to the eye or eyes of a person. The contact lens may be in the form of a corneal lens (e.g. a lens that rests on the cornea of the eye). The contact lens may be a soft contact lens, such as a hydrogel contact lens or a silicone hydrogel contact lens.

A contact lens according to the present disclosure comprises an optic zone. The optic zone encompasses parts of the lens that have optical functionality. The optic zone is configured to be positioned over the pupil of an eye when in use. For contact lenses according to the present disclosure, the optic zone comprises the central region, and the annular region that circumferentially surrounds the central region. In the context of the present disclosure, the annular region is a substantially annular region that surrounds the optic zone. It may have a substantially circular shape or a substantially elliptical shape. It may fully surround the optic zone. It may partially surround the optical zone. The optic zone is surrounded by a peripheral zone. An edge zone may surround the peripheral zone. The peripheral zone is not part of the optic zone, but sits outside the optic zone and above the iris when the lens is worn, and it provides mechanical functions, for example, increasing the size of the lens thereby making the lens easier to handle, providing ballasting to prevent rotation of the lens, and/or providing a shaped region that improves comfort for the lens wearer. The peripheral zone may extend to the edge of the contact lens.

Contact lenses according to embodiments of the present disclosure have a peripheral zone thickness variation that is configured to control the rotation of the lens. The variation in thickness of thickness of the peripheral zone may be configured to stabilise the lens in a particular orientation. The variation in thickness of thickness of the peripheral zone may be configured to promote rotation of the lens in a particular direction.

The thickness of various regions of the peripheral zone can be selected using routine methods known to persons of ordinary skill in the art. Thicknesses and configurations can be selected to achieve any desired amount of contact lens rotation on the eye without significantly decreasing contact lens comfort or lens awareness. For example, in the design of the peripheral zone, a contact lens can be manufactured with a particular target design and thickness and clinically tested on an eye of a person. The amount of lens rotation can be observed by an eye care practitioner using a slit lamp or other conventional tool. Typically, multiple contact lenses with different thickness profiles will be manufactured and tested on-eye of many people (e.g., 20 or more) to assess lens rotation and lens comfort. If the lens rotation is too little or too great, or if lens comfort is significantly reduced compared to a control lens, then a lens with a different thickness profile in the peripheral zone is manufactured and tested.

The lens include a stabilisation feature or features. For example, the lens may include a periballast, a prism ballast, or a dynamic stabilisation feature (such as two thin zones provided along a vertical meridian separating the superior and inferior halves). The peripheral zone may include a ballast to orient the lens when positioned on the eye of a wearer. When placed on the eye of a wearer, the lens may rotate under the action of the wearer's eyelid to a pre-determined angle of repose. The ballast may be a wedge and the rotation may result from a rotational force imparted by the wearer's eyelids on the wedge. A prism ballast may be provided on the front surface of the lens. A contact lens with a prism ballast may have a uniform thicknesses extending in horizontal bands across the peripheral zone, where the horizontal bands progress from a lower thickness in the superior portion of the lens, and progressively increase to a greater relative thickness in the inferior portion of the lens before tapering to a thinner thickness closer to the inferior edge of the contact lens. As a frame of reference, a horizontal band would be parallel to a horizontal line passing through the centre of the contact lens when viewed in plan view and when the superior portion of the lens is located at the top of the view. In other words, the horizontal bands are parallel to the 0 degree/180 degree meridian of the contact lens, as understood by a person of ordinary skill in the art. If a contact lens includes a dynamic stabilisation feature, the contact lens may have a superior and inferior portion in the peripheral zone that is relatively thinner than the thickness of the peripheral zone along the 0 degree/180 degree meridian of the contact lens. As an example, the stabilisation feature may have a thickness from 50 to 100 micrometers in the superior region of the peripheral zone, and the thickness may progressively increase towards the 0 degree/180 degree meridian. If the stabilisation feature has dual thin zones, the region of maximum thickness may be in proximity of the 0 degree/180 degree meridian, and may range from 250 micrometers to 450 micrometers. If the stabilisation feature is a prism ballast, the thickness in the peripheral zone may continue to increase to a maximum thickness in the inferior portion of the peripheral zone, and the maximum thickness may be between about 250 micrometers and 450 micrometers.

The contact lens may be substantially circular in shape and have a diameter from about 4 mm to about 20 mm, preferably between about 13.0 mm and 15.0 mm. As used herein a reference to a diameter is a reference to a chord diameter. The centre thickness of the lens may between about 50 micrometres and about 300 micrometres. The peripheral zone of the lens may have a thickness of between about 50 micrometres and about 450 micrometres. The thickness of the lens can be measured using conventional techniques and instruments such as a Rehder gauge. The optic zone may be substantially circular in shape and may have a diameter from about 2 mm to about 10 mm. In some embodiments, the contact lens has a diameter from 13 mm to 15 mm, and the optic zone has a diameter from 7 mm to 9 mm.

The first optic axis may lie along the centreline of the lens. The base power of the central region may be provided by at least one surface having a curvature that is centred on the optic axis. The central region may focus light from a distant point object, on the optical axis, to a spot on the optic axis at a distal focal surface. The term surface, as used herein, does not refer to a physical surface, but to a surface that could be drawn through points where light from distant objects would be focused. Such a surface is also referred to locally as an image plane (even though it can be a curved surface) or image shell. The eye focuses light onto the retina which is curved, and in a perfectly focused eye, the curvature of the image shell would match the curvature of the retina. However, in the art, the curved surface of the retina is commonly referred to as a plane.

Light rays from a distant point source that pass through the at least one add power region of the annulus may be focused away from the optic axis on an add power focal surface. Light rays that pass through the central region may form an on-axis blur circle or ellipse (for a toric lens) at the add power focal surface. Light rays from a distant point source that pass through the add power region may be focused, forming a focused arc, outside of the blur circle or ellipse.

The at least one add power region may be configured to generate a light distribution at a focal plane of the add power region that generally replicates any zonal geometry of the add power region. The focal plane of the add power region is defined by a plane that passes through the point at which light that passes through the add power region is focused. For an add power region that spans a portion of an annulus, a focused arc may be generated at the focal plane of the add power region. The curvature of the treatment portion can be selected so as to position light that is focused at a treatment portion focal plane at a distance of between about 2 micrometres and about 700 micrometres from and normal to the optic axis, preferably between about 20 micrometres and about 300 micrometres.

The central region of the lens has the base power. The add power region of the annular region has an add power of at least 0.5 D, and the net near power of the add power region is the sum of the base power and the add power.

The base power of the lens may be positive; the add power region then has a power that is more positive than the base power. In this case, the add power focal surface will be closer to the lens than the distal focal surface. An on-axis image will not be formed by light passing through the add power region. It may be that the light rays focused by the add power region do not intersect with the first optical axis of the contact lens at all, or not until after they have passed the add power focal surface.

For a lens having a positive base power, the add power region will have a greater curvature than the curvature providing the base power. In this case, the radius of curvature of the add power region will be smaller than the radius of curvature of the central region. The centre of curvature of the add power region may be closer to the lens than the centre of curvature of the central region.

The base power of the lens may be negative, and the at least one add power region may have a power that is less negative than the power of the base region, or the add power region may have a positive power. Considering the lens positioned on the cornea, if the power of the add power region is less negative than the base power, an add power focal surface will be more anterior in the eye than the distal focal surface. Considering the lens when it is not positioned on the cornea, if the power of the add power region is positive, an add power focal surface will be on the opposite (image) side of the lens than the distal focal surface (which will be a virtual focal surface on the object side of the lens); if the power of the add power region is negative (but less negative than the base power), a virtual maximum add power focal surface will be further from the lens than a virtual distal focal surface.

The area of the add power region is less than 75% of the area of the annular region. The remainder of the annular region may have a curvature providing the base power. Light rays that pass through the remainder of the annular region may be focused at the distal focal surface. The annular region therefore provides a localised add power which may change the focus of light falling incident on specific regions of the retina when the lens is being worn by a wearer, whilst not impacting light falling incident on other regions of the retina. The combination of a varying thickness profile of the peripheral zone, which controls the rotation of the lens, and a localised add power region may be used to provide a targeted add power when the lens is in use.

The area of the add power region may be less than 50% of the area of the annular region. The area of the add power region may be less than 25% of the area of the annular region. The area of the add power region may be less than 15% of the area of the annular region. The area of the add power region may be less than 10% of the area of the annular region.

The variation in thickness of the peripheral zone may be symmetric about a lens diameter, wherein the lens diameter divides the annular region into two halves, and wherein the add power region is confined to one half of the annular region. The variation in thickness may be substantially confined to lie along a lens diameter. The variation in thickness of the peripheral zone may be used to control the position of the add power region relative to the wearer's retina when the lens is worn by a wearer.

The variation in thickness of the peripheral zone may comprise a ballast, and the ballast may control the rotation of the lens. When the lens is in use, the lens may rotate such that the ballast is at or towards the bottom of the lens, i.e. in the inferior half. The lens may rotate such that the ballast lies along the line dividing the temporal and nasal halves of the lens.

The lens diameter may lie along the line separating the nasal and temporal halves of the lens. The add power region may be confined to the nasal half of the lens or the temporal half of the lens. For each of these cases, the add power will be targeted towards the opposite half of the retina.

Each half of the annular region may be divided into an upper quadrant and a lower quadrant, and the add power region may be confined to a single quadrant. The add power region may be provided in an opposite half of the lens to the variation in thickness of the peripheral zone. The add power region may be provided in the same half of the lens to the variation in thickness of the peripheral zone. The variation in thickness of the peripheral zone may be confined to the inferior half of the lens. The add power region may be confined to any one of the superior-temporal, superior-nasal, inferior-temporal or inferior-nasal quadrants of the lens. For each of these cases, the add power will be targeted towards the opposite quadrant of the retina.

The add power region may have a curvature providing an add power of 5.0 D or more. The annular region may further comprise a lower add power region having a curvature providing an add power of between 0 D and 5.0 D A series of points defining centres of curvature of the add power region may form a segment of an annulus surrounding the optic axis wherein the segment is a first distance from the optical axis, and a series of points defining centres of curvature of the lower add power region may form a further segment of an annulus of a ring surrounding the optic axis, wherein this segment is a second, different distance from the optical axis, the second distance being smaller than the first distance.

Light rays from a distant point source that pass through the at least one lower add power region may be focused at an intermediate add power focal surface. For a lens that has a positive base power and at least one lower add power region that has a more positive power than the base power, the intermediate add power focal surface will be closer to the lens than the distal focal surface but further from the lens than the add power focal surface. An on-axis image will also not be formed by light passing through the at least one lower add power regions. It may be that the light rays focused by the at least one lower add power region do not intersect with the first optical axis of the contact lens at all, or not until after they have passed the intermediate and add power focal surfaces. Considering a lens positioned on the cornea, if the lens has a negative base power, and at least one lower add power region has a less negative power than the base power, an intermediate add power focal surface will be closer to the lens than the distal focal surface, but further away than the add power focal surface. Considering a lens not positioned on the cornea, if the lens has a negative base power and at least one lower add power region has a less negative power than the base power, a virtual add power focal surface will be further from the lens than the virtual distal focal surface, but closer than the virtual add power focal surface.

For a lens having a positive base power, the lower add power region may have a curvature that is in between the curvature of the add power region and the curvature of the central region. In this case, the radius of curvature of the at least one lower add power region will be smaller than the radius of curvature of the central region but larger than the radius of curvature of the at least one add power region. The centre of curvature of the at least one lower-add power region may be closer to the lens than the centre of curvature of the central region but further from the lens to the centre of curvature of the at least one add power meridian.

For a lens having a negative base power, the lower add power region may have a power that is less negative than the power of the base region, or the add power region may have a positive power, but the power will be less positive or more negative than the add power region. Considering the lens positioned on the cornea, if the power of the lower add power region is less negative than the base power, an add power focal surface will be more anterior in the eye than the distal focal surface but less anterior in the eye than the add power focal surface. Considering the lens when it is not positioned on the cornea, if the power of the lower add power region is positive, a lower add power focal surface will be on the opposite (image) side of the lens than the distal focal surface (which will be a virtual focal surface on the object side of the lens); if the power of the lower add power region is negative (but less negative than the base power and more negative than the add power), a virtual maximum add power focal surface will be further from the lens than a virtual distal focal surface and closer to the lens than a virtual add power focal surface..

The lower add power region may have an area of less than 25% of the annular region. The lower add power region may have an area of less than 10% of the annular region. The add power region and the lower-add power region may be confined to the same half of the lens, or may be provided in opposite halves of the lens. The add power region and the lower add power region may each have an area of less than 25% of the annular region. The add power region and the lower-add power region may be confined to the same quadrant of the lens or may be provided in different quadrants of the lens. For example, the add power region may be provided in the superior-nasal quadrant and the lower-add power region may be provided in the inferior temporal quadrant. The add power region may be provided in any of the four quadrants, and lower add power region may be provided in any of the other three quadrants, or the same quadrant. The lower add power region may be adjacent to the add power region.

The annular region may further comprise a base power region, having the curvature providing the base power and centred on the centre of curvature of the central region. The base power region may focus light from a distant point object to a spot on the first optical axis at a distal surface. The spot may coincide with the spot formed by light passing through the central region. At least 25% of the area of the annular region may have the base power. In embodiments wherein the annular region comprises an add power region and a lower add power region, base power regions may be provided separating these regions. The add power region may be a continuous region having an area that is approximately 50% of the area of the annular region, and the area of the base power region may be a continuous region having an area that is approximately 50% of the annular region. The add power region may span any of the inferior, superior, temporal or nasal halves of the lens and the base power region may span the remaining half.

The curvatures providing the base power, the add power, and any lower add powers may be curvatures of the anterior surface of the lens. The curvatures providing the base power, the add power, and any lower add powers may be curvatures of the posterior surface of the lens. The curvatures providing the base power, the add power, and any lower add powers may be curvatures of the anterior surface and the posterior surface of the lens providing a combined effect.

The add power region of the annular region has a width, and a normal to a surface of the add power region taken halfway across the width of the treatment zone region may cross a normal, taken at the centre of the central region, at the centre of the curvature of a surface of the central region. The add power region may thereby focus light from each distant point object to form a focused arc at a proximal focal surface, the arc being outside of and surrounding the blur circle or ellipse formed by the light focused by the central region. The surface of the add power region may be an anterior surface. The surface of the central zone may be an anterior surface. The surface of the add power region may be the surface that has a curvature providing an add power. The surface of the central zone may be the surface that has a curvature providing the base power.

The add power region may have an asymmetric power profile. In embodiments that have a lower add power region, the lower add power region may have an asymmetric power profile.

The annular region may have a substantially circular outer circumference. The annular region may have a substantially elliptical outer circumference. The central region may be substantially circular in shape and may have a diameter of between about 2 and 9 mm, preferably between about 2 and 7 mm, more preferably between 2 and 5 mm. The central region may be substantially elliptical in shape. The base curve may have a radius of curvature of between about 8.0 mm and 9.0 mm. The annular region may extend radially outwards from a perimeter of the central region by between about 0.1 to 4 mm, preferably between about 0.5 and 1.5 mm. For example, the radial width of the annular region may be about 0.1 mm to about 4 mm, and preferably may be about 0.5 mm to about 1.5 mm. The perimeter of the central region may define a boundary between the central region and the annular region, and the annular region may therefore be adjacent to the central region.

The annular region may abut the central region. A blending region may be provided between the central region and the annular region. The blending region should not substantially affect the optics provided by the central region and the annular region, and the blending region may have a radial width of 0.05 mm or less, although it may also be as wide as 0.2 mm, or as wide as 0.5 mm in some embodiments.

The annular region may extend radially outwards to abut the peripheral zone. The ad-power region may span the radial width of the annular region.

The central region has a base power, which in the context of the present disclosure, is defined as the average absolute refractive power of the central region. Any base power regions will also have the base power. The base power will correspond to the labelled refractive power of the contact lens as provided on the contact lens packaging (though in practice it may not have the same value). Thus, the lens powers given herein are nominal powers. These values may differ from lens power values obtained by direct measurement of the lens, and are reflective of the lens powers that are used to provide a required prescription power when used in ophthalmic treatment.

For lenses used in the treatment of myopia, the base power will be negative or close to zero, and the central region will correct for distance vision. The base power may be between 0.5 diopters (D) and -15.0 diopters. The base power may be from -0.25 D to -15.0 D.

The add power is non-zero and is at least 0.5 D. The add power is defined as the difference between the base power and the power of the add power meridian. The add power may be between about +0.5 and +20.0 D, preferably between about +0.5 and +10.0 D. For a lens having a positive base power, the power of the add power region will be more positive than the base power and similarly, the power of any lower add power regions will be more positive than the base power. For a lens having a lens having a negative base power, the power of each of the add power region may be less negative than the base power, or the power of each of the add power region may be a positive power. Similarly, the power of each of any lower add power regions may be less negative than the base power, or the power of any lower add power regions may be a positive power. The net power of the annular region in the add power region will be the sum of the base power and the add power.

For embodiments having a lower add power region, the lower add power region may have a lens power that is greater (i.e. more positive than or less negative than) the base power of the central region. The power of the lower add power region may be described as a lower add power, which is the difference between the base power and the power of the lower add power region. The lower add power may be between about +0.1 and +5.0 D, preferably between about +0.1 and +3.0 D. The net power of the annular region in the lower-add power regions will be the sum of the base power and the lower add power.

The lens may comprise at least two concentric annular regions, wherein each of the annular regions comprises at least one add power region having a curvature providing an add power of 0.5 D or more, and wherein the area of the add power region is less than 75% of the area of the annular region. The central region comprises a surface having a curvature centred at a point on the optic axis, and wherein series of points defining the centres of curvature of each of the add power regions form concentric arcs surrounding the optic axis.

Each of the annular regions may be an annular region incorporating any of the features set out above. Defining the position around the circumference of the lens by an angle θ, where θ varies between 0_{°} and 360_{°}, the add power regions of each annular region may be at the same θ values around the circumference of the annular region. Alternatively, the add power regions of each of the annular regions may be at different θ values around the circumference. The add power regions of different concentric annular region may have the same add power. The add power regions of different concentric annular region may have different add powers.

Preferably, the annular region or annular regions do not include lenslets, or the annular region(s) are free of lenslets (that is, small lenses provided on a surface of the contact lens that have diameters that are smaller than the diameter of the optic zone of the contact lens).

The contact lens may be a toric contact lens. For example, the toric contact lens may include an optic zone shaped to correct for a person's astigmatism.

The contact lens may comprise an elastomer material, a silicone elastomer material, a hydrogel material, or a silicone hydrogel material, or combinations thereof. As understood in the field of contact lenses, a hydrogel is a material that retains water in an equilibrium state and is free of a silicone-containing chemical. A silicone hydrogel is a hydrogel that includes a silicone-containing chemical. Hydrogel materials and silicone hydrogel materials, as described in the context of the present disclosure, have an equilibrium water content (EWC) of at least 10% to about 90% (wt/wt). In some embodiments, the hydrogel material or silicone hydrogel material has an EWC from about 30% to about 70% (wt/wt). In comparison, a silicone elastomer material, as described in the context of the present disclosure, has a water content from about 0% to less than 10% (wt/wt). Typically, the silicone elastomer materials used with the present methods or apparatus have a water content from 0.1% to 3% (wt/wt). Examples of suitable lens formulations include those having the following United States Adopted Names (USANs): methafilcon A, ocufilcon A, ocufilcon B, ocufilcon C, ocufilcon D, omafilcon A, omafilcon B, comfilcon A, enfilcon A, stenfilcon A, fanfilcon A, etafilcon A, senofilcon A, senofilcon B, senofilcon C, narafilcon A, narafilcon B, balafilcon A, samfilcon A, lotrafilcon A, lotrafilcon B, somofilcon A, riofilcon A, delefilcon A, verofilcon A, kalifilcon A, and the like.

Alternatively, the lens may comprise, consist essentially of, or consist of a silicone elastomer material. For example, the lens may comprise, consist essentially of, or consist of a silicone elastomer material having a Shore A hardness from 3 to 50. The shore A hardness can be determined using conventional methods, as understood by persons of ordinary skill in the art (for example, using a method DIN 53505). Other silicone elastomer materials can be obtained from NuSil Technology or Dow Chemical Company, for example.

According to a second aspect, the present disclosure provides a method of manufacturing a lens. The method comprises forming a contact lens. The lens includes an optic zone and a peripheral zone surrounding the optic zone. The peripheral zone has a variation in thickness configured to control rotation of the lens. The optic zone comprises a central region, the central region having a base power provided by at least one surface having a curvature. The central region thereby focuses light from distant point objects to a distal focal surface, said light forming a blur circle or ellipse as it passes through a proximal focal surface. The optic zone comprises an annular region that circumferentially surrounds the central region. The annular region includes an add power region having an add power provided by at least one surface having a curvature, the add power being 0.5 D or more, and the area of the add power region being less than 75% of the area of the annular region. A series of points defining centres of curvature of the add power region form a segment of an annulus. The add power region thereby focusing light from distant point objects to form a focused arc at the proximal focal surface.

The lens may include any of the features set out above.

The method of manufacturing may comprise forming a female mold member with a concave lens forming surface and a male mold member with a convex lens forming surface. The method may comprise filling a gap between the female and male mold members with bulk lens material. The method may further comprise curing the bulk lens material to forms the lens.

The contact lens may be formed using a lathing process. The lens can be formed by cast molding processes, spin cast molding processes, or lathing processes, or a combination thereof. As understood by persons skilled in the art, cast molding refers to the molding of a lens by placing a lens forming material between a female mold member having a concave lens member forming surface, and a male mold member having a convex lens member forming surface.

In a third aspect of the disclosure there is also provided a method of using the contact lens described herein. The methods may be effective in reducing progression of a refractive error, such as reducing the progression of myopia. When the present lenses are used to reduce the progression of myopia, the methods include a step of providing the contact lenses to a person whose eyes are able to accommodate for varying near distances (e.g., in a range of from about 15 cm to about 40 cm). Some embodiments of the methods include a step of providing the ophthalmic lenses to a person that is from about 5 years old to about 25 years old. The providing can be performed by an eye care practitioner, such as an optician or optometrist. Alternately, the providing can be performed by a lens distributor that arranges for the delivery of the ophthalmic lenses to the lens wearer.

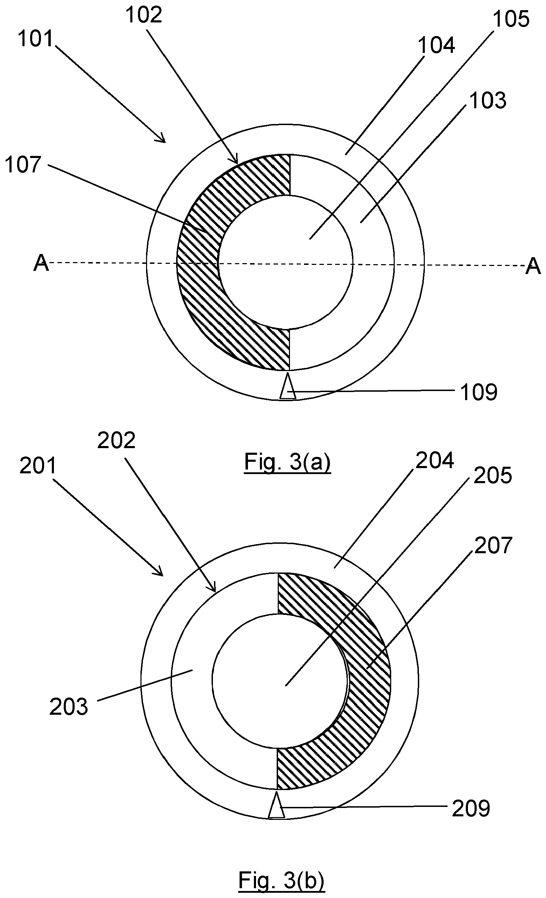

Fig. 3(a) shows a schematic top view of a lens 101 for use in the slowing progression of myopia (e.g., myopia control) according to an embodiment of the present disclosure. The lens 101 comprises an optic zone 102, which approximately covers the pupil, and a peripheral zone 104 that sits over the iris. The peripheral zone 104 provides mechanical functions, including increasing the size of the lens thereby making the lens 101 easier to handle, and providing a shaped region that improves comfort for the lens 101 wearer. The peripheral zone 104 has variation in thickness provided by a ballast 109 that is configured to control rotation of the lens, so that, when the lens 101 is being worn, the lens 101 remains in a stable position in spite of rotational forces from the wearer blinking. The optic zone 102 provides the optical functionality of the lens 101, and the optic zone comprises an annular region 103 and a central region 105. The annular region 103 comprises an add power region 107 that has an add power of 0.5 D or more. The add power region 107 spans approximately 50% of the area of the annular region 103, in this case, the temporal half of the lens. This lens 101 has a positive base power and the central region 105 has a curvature providing the base power. The anterior surface of the add power region 107 has a greater curvature than the anterior surface of the central region 105, and therefore provides a greater power than the base power of the central region 105. The remainder of the annular region 103 that does not comprise the add power region 107 also has the base power. Fig. 4 shows a schematic diagram of a cross-section through the lens of Fig. 3(a) taken along the line A-A. The anterior surface of the central region 105 defines a portion of a surface of a sphere of larger radius 110 that has its centre on the first optical axis 118. The anterior surface of the annular region 105 that has the base power defines a portion of a face of the same sphere. The anterior surface of the add power region 103 defines a curved annular surface with smaller radius 106 and a centre that is a first distance from the optical axis 118.

As shown in Fig. 4, at the distal focal surface 117, light rays passing through the central region 105 and the non-add power region of the annular region 103 are focused. A single image is not formed at the proximal focal surface 113. At the proximal focal surface 113, for a point source at infinity, light rays passing through the central region 105 and the non-add power portion of the annular region generate a blur circle or ellipse. However, light rays from a distant point source passing through the add power region 107 generate a segment of an annulus which surrounds the blur circle or ellipse.

As the add power region 107 spans the temporal half of the annular region 103, the add power will change the focus of light that falls incident on the nasal half of the retina. The combination of a ballast 109 provided on the peripheral zone, which controls the rotation of the lens 101 when it is being worn, and a localised add power region 107 may be used to provide a targeted add power at particular regions of the retina.

Fig. 3(b) shows schematic top view of a lens 201 for use in the slowing progression of myopia (e.g., myopia control) according to an embodiment of the present disclosure. This lens 201 is similar to the lens 101 of Fig. 3(a), but for this lens, the add power region 207 spans the opposite half of the annular region 203, which is the nasal half of the annular region in this case. The add power will therefore be targeted towards the temporal half of the retina.

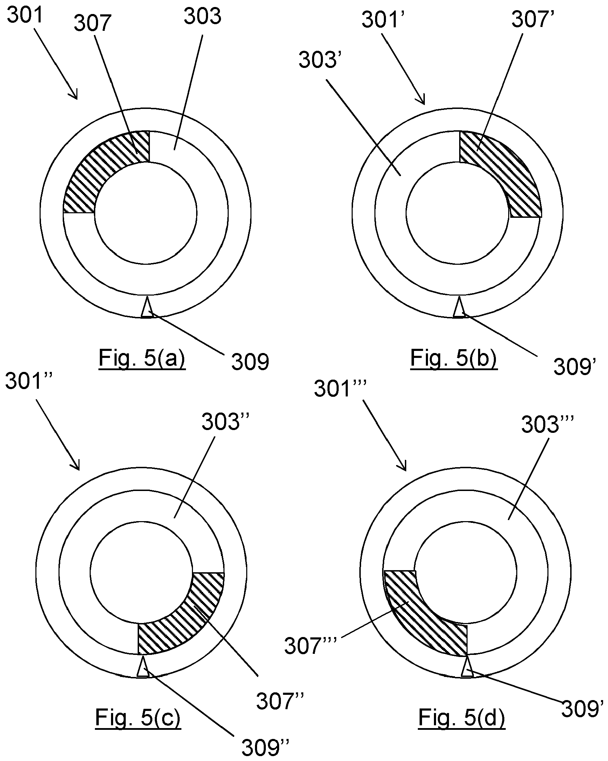

Fig. 5(a) shows a schematic top view of a lens 301 for use in the slowing progression of myopia (e.g., myopia control) according to an embodiment of the present disclosure. The lens 301 is similar to the lenses of Fig. 3(a) and 3(b) but the add power region 307 spans approximately 25% of the annular region 303 and is confined to a single quadrant. Figs. 5(b)-5(d) show three similar lenses 301', 301", 301"' which have add power regions that each span approximately 25% of the annular region. For each of these lenses 301, 301', 301", 301‴, the add power region 307, 307', 307", 307‴, spans a different quadrant relative to the ballasts 309, 309', 309", 309‴. For the lens of Fig. 5(a) the add power spans the superior-temporal quadrant of the lens, therefore the add power is targeted towards the inferior-nasal quadrant of the retina. For the lens of Fig. 5(b) the add power spans the superior-nasal quadrant of the lens, therefore the add power is targeted towards the inferior-temporal quadrant of the retina. For the lens of Fig. 5(c) the add power spans the inferior-nasal quadrant of the lens, therefore the add power is targeted towards the superior-temporal quadrant of the retina. For the lens of Fig. 5(d) the add power spans the inferior-temporal quadrant of the lens, therefore the add power is targeted towards the superior-nasal quadrant of the retina.

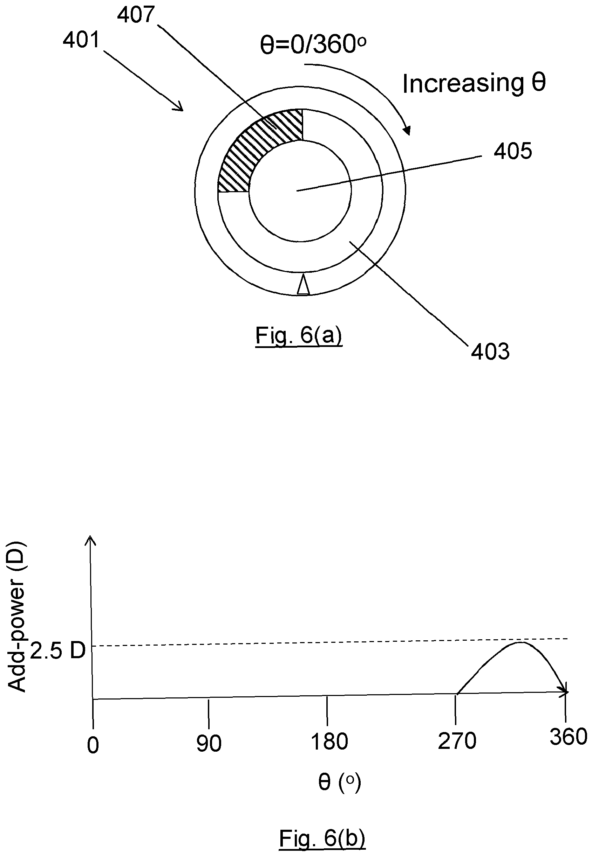

Fig. 6(a) shows a schematic top view of a lens 401 for use in the slowing progression of myopia (e.g., myopia control) according to an embodiment of the present disclosure. The lens 401 is similar to the lens of Fig. 5(a) and the add power region 407 spans approximately 25% of the annular region 403. The curvature of the anterior surface of the lens in the add power region 403 varies between 0 D and 2.5 D relative to the base power, such that the add power of the add power region 407 varies around the annular region 403. Defining the position around the circumference of the lens by an angle θ, where θ varies between 0_{°} and 360_{°} (as shown in Fig. 6(a)), this gives rise to an asymmetric peak profile in add power, as shown in Fig. 6(b)

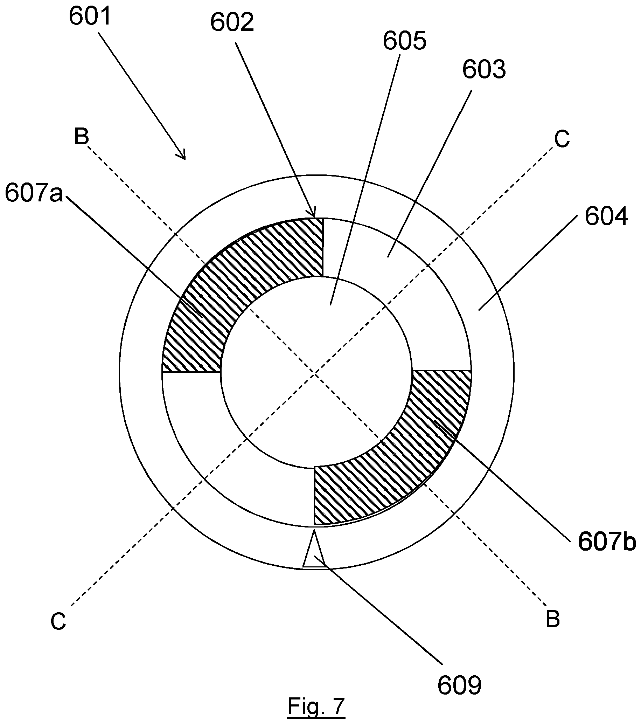

Fig. 7(a) shows a schematic top view of a lens 601 for use in the slowing progression of myopia (e.g., myopia control) according to an embodiment of the present disclosure. The lens is similar to the lens of Fig. 3(a), and the lens of Fig. 5(a). However, the annular region 103 comprises a first 607a and second 607b add power region. Each add power regions 607a, 607b spans approximately 25% of the annular region 603, and the two add power regions 607a, 607b span opposite quadrants of the annular region 603. The first add power region 607a spans the superior-temporal quadrant of the lens and second add power region 607b spans the inferior-nasal quadrant of the lens. The add power regions 607a, 607b have the same add power. The add power regions 607a, 607b can be used to target add power at two different regions of the retina, The first add power region 607a targets the inferior-nasal region of the retina and the second add power region 607b targets the superior-temporal region of the retina. This lens 601 has a positive base power and the central region 605 has a curvature providing the base power. The anterior surfaces of the add power regions 607a, 607b have the same curvature, and have a greater curvature than the anterior surface of the central region 605. The add power regions 607a, 607b, therefore provide a greater power than the base power of the central region 605. The remainder of the annular region 603 that not spanned by the two add power regions 607a, 607b, has the base power.

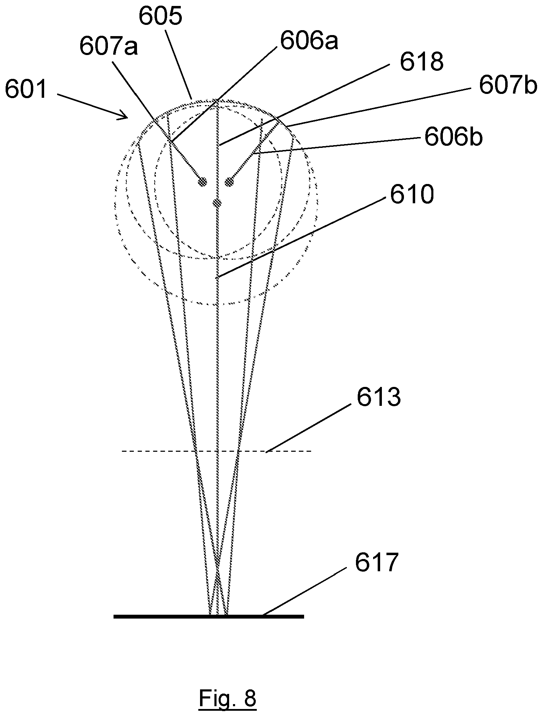

Fig. 8 shows a schematic diagram of a cross-section through the lens 601 of Fig. 7 taken along the line B-B. The anterior surface of the central region 605 defines a portion of a surface of a sphere of larger radius 610 (indicated by the dot-dash circle) that has its centre on the first optical axis 118. The anterior surface of the add power regions 607a, 607b define curved annular surfaces with smaller radii 606a, 606b (indicated by the dashed circles) of the same magnitude, and centres that are both the same first distance from the optical axis 618.

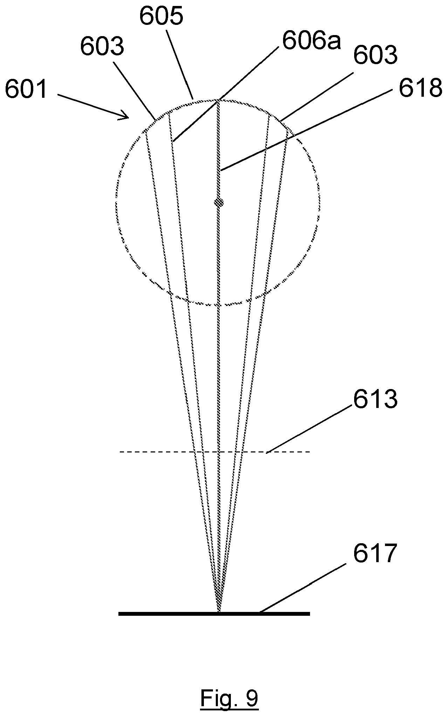

As shown in Fig. 8, at the distal focal surface 617, light rays passing through the central region 605 are focused. A single image is not formed at the proximal focal surface 613. At the proximal focal surface 613, for a point source at infinity, light rays passing through the central region 105 generate a blur circle 128. However, light rays from a distant point source passing through the add power regions 607a, 607b generate focused arcs of an annulus which surround the blur circle 128. At the distal focal surface 617, light rays passing through the central region 105 are focused. Along the line C-C (shown in Fig. 7), the annular region 603 has a curvature providing the same base power as the central region 605. The anterior surface of the central region 605 and the anterior surface of the annular region 603 define a portion of a surface a single sphere, which is centred on the optical axis 618, as shown in Fig. 9.

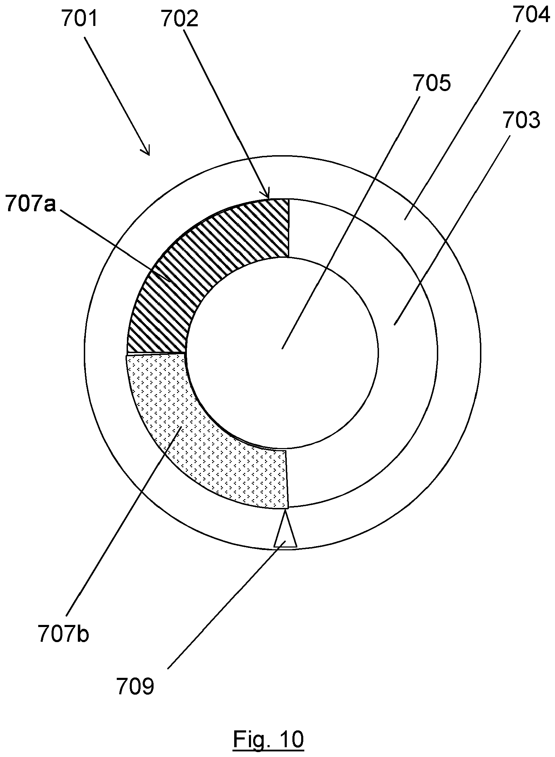

Fig. 10 shows a schematic top view of a lens 701 for use in the slowing progression of myopia (e.g., myopia control) according to an embodiment of the present disclosure. The lens is similar to the lenses of Fig. 3(a) and 3(b), however, the annular region 703 comprises two add power regions 707a, 707b that have different add powers relative to the base power of the central region 705. Each of the two add power regions 707a, 707b span approximately 25% of the annular region 703. The two add power regions 707a, 707b span adjacent quadrants of the annular region 703, such that the add power is confined to one half of the annular region 703. The remaining half of the annular region 703 has the base power. The two add power regions 707a, 707b can be used to target different add powers at two different regions of the retina. In this case, the add power regions 707a, 707b span the superior-temporal and inferior-temporal quadrants of the lens respectively, and therefore target add power at the inferior-nasal and superior nasal quadrants of the retina respectively. This lens 701 has a positive base power and the central region 705 has a curvature providing the base power. The anterior surfaces of the add power regions 707a, 707b have different curvatures, but both have a greater curvature than the anterior surface of the central region 705. The add power regions 707a, 707b, therefore both provide a greater power than the base power of the central region 705. The remaining half of the annular region 703 not spanned by the two add power regions 707a, 707b, has the base power.

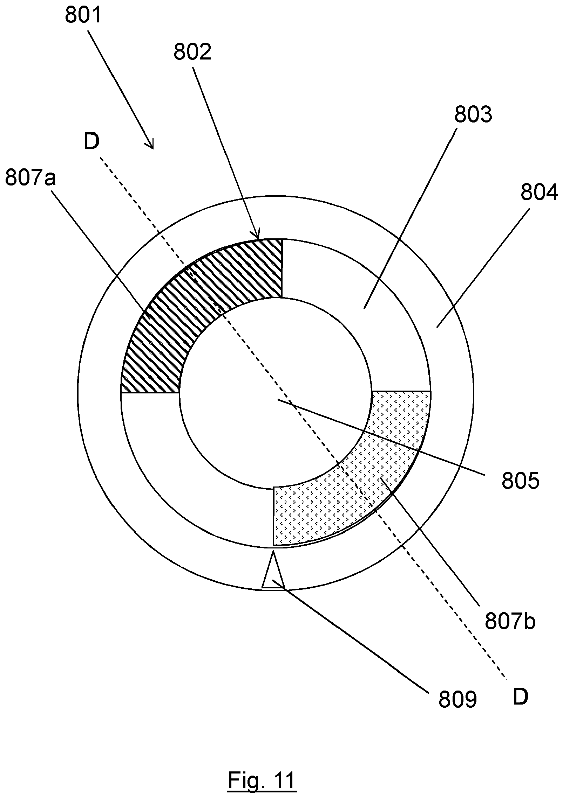

Fig. 11 shows a schematic top view of a lens 801 for use in the slowing progression of myopia (e.g., myopia control) according to an embodiment of the present disclosure. The lens is similar to the lenses of Fig. 10 however, the two add power regions 807a, 807b span opposite, and non-adjacent quadrants of the annular region 803. The two remaining quadrants of the annular region 803 have the base power, and separate add power regions 807. The two add power regions 807a, 807b can be used to target different add powers at different regions of the retina. In this case, the add power regions 807a, 807b span the superior-temporal and inferior-nasal quadrants of the lens respectively, and therefore will target add power at the inferior-nasal and superior-temporal quadrants of the retina respectively. This lens 801 has a positive base power and the central region 805 has a curvature providing the base power. The anterior surfaces of the add power regions 807a, 807b have different curvatures, but both have a greater curvature than the anterior surface of the central region 805. The add power regions 807a, 807b, therefore both provide a greater power than the base power of the central region 805.

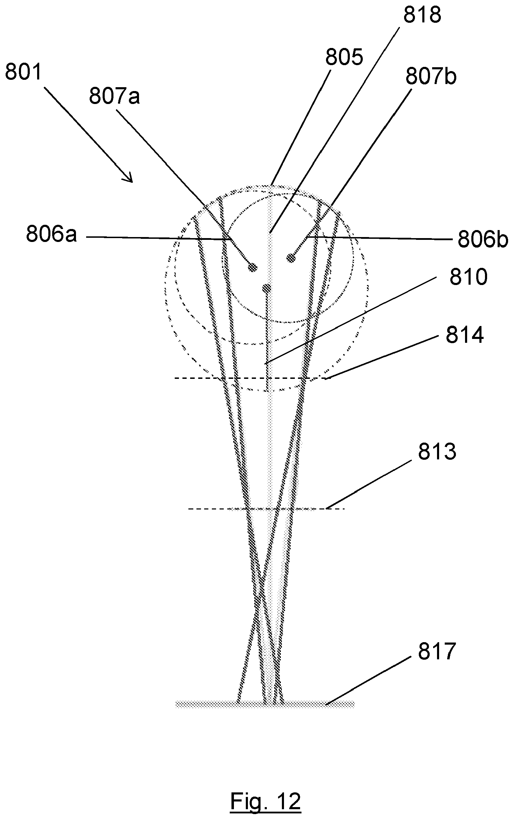

Fig. 12 shows a schematic diagram of a cross-section through the lens 801 of Fig. 11 taken along the line D-D. The anterior surface of the central region 805 defines a portion of a surface of a sphere of larger radius 810 that has its centre on the first optical axis 818. The anterior surfaces of the add power regions 807a, 807b define different, curved annular surfaces. The anterior surface of the first add power region 807a has a smaller radii of curvature 806a (indicated by the dashed circle) than the radii of curvature 810 (indicated by the dot-dash circle) of the anterior surface of the central region 805. The anterior surface of the second add power region 807b has a smaller radii 806b (indicated by the dotted circle) than the radii of curvature 810 of the anterior surface of the central region 805, and the radii of curvature 806a of the anterior surface of the first add power region 807a. The first add power region 807a has a centre of curvature that is a first distance from the optical axis 818 and the second add power region 807b has a centre of curvature that is a second, different distance from the optical axis 818.

As shown in Fig. 12, at the distal focal surface 817, light rays passing through the central region 605 are focused. A single image is not formed at either the first proximal focal surface 813 that relates to the first add power region 807a, or the second proximal focal surface 814 that relates to the second add power region 807b. At the first and second proximal focal surfaces 813, 814 for point sources at infinity, light rays passing through the central region 105 generate a blur circle. However, light rays from distant point sources passing through the add power regions 807a, 807b generate focused arcs of annuli at the first and second proximal focal surfaces 813, 814 respectively, which surround the respective blur circles. At the distal focal surface 817, light rays passing through the central region 805 are focused.

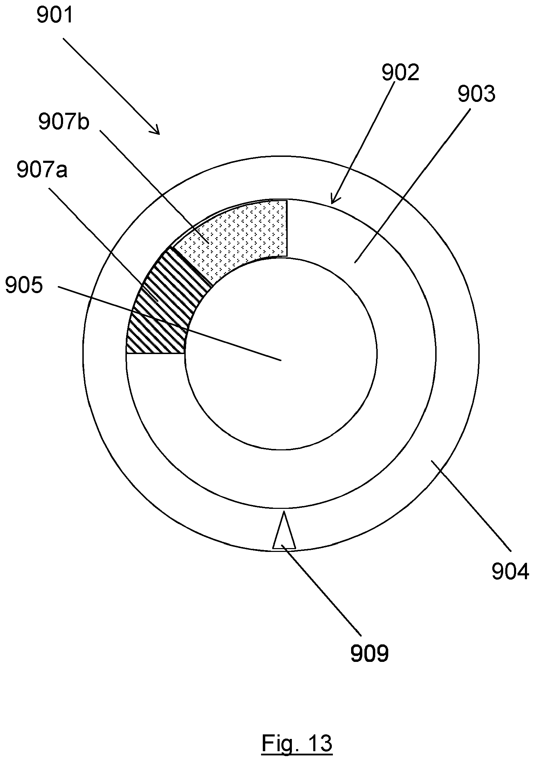

Fig. 13 shows a schematic top view of a lens 901 for use in the slowing progression of myopia (e.g., myopia control) according to an embodiment of the present disclosure. The lens is similar to the lenses of Fig. 10 however, the two add power regions 907a, 907b each span an area of approximately 1/8 of the annular region. The two add power regions 907a, 907b span adjacent areas of the annular region, such that the add power region 907 is confined to one quadrant of the annular region 903, in this case, the superior-temporal quadrant of the lens. The remaining three quadrants of the annular region have the base power. The two add power regions 907a, 907b have different add powers. The two add power regions 907a, 907b can be used to target different add powers at different regions of the retina within the inferior-nasal quadrant of the retina. This lens 901 has a positive base power and the central region 905 has a curvature providing the base power. The anterior surfaces of the add power regions 907a, 907b have different curvatures, but both have a greater curvature than the anterior surface of the central region 805. The add power regions 907a, 907b, therefore both provide a greater power than the base power of the central region 905.

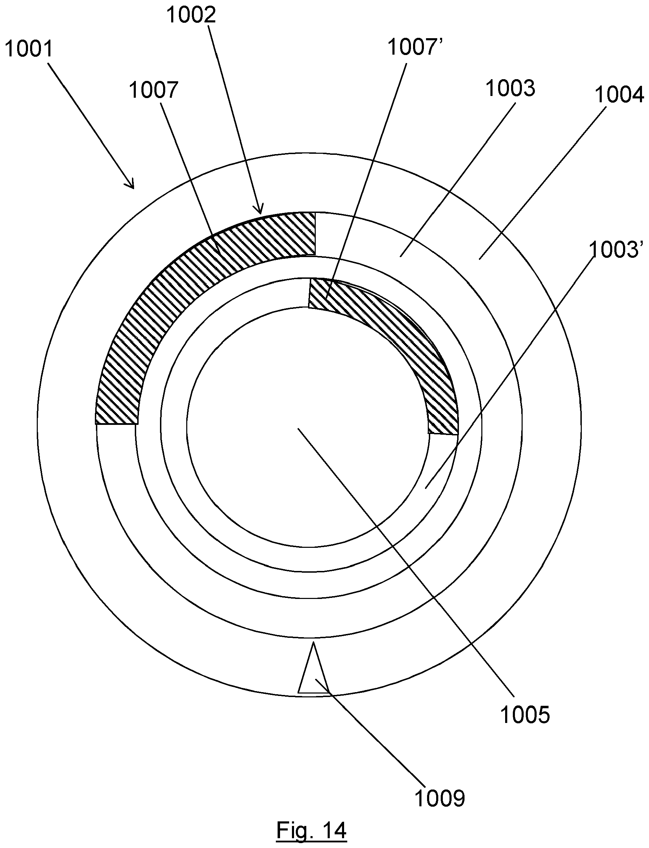

Fig. 14 shows a schematic top view of a lens 1001 for use in the slowing progression of myopia (e.g., myopia control) according to an embodiment of the present disclosure. The lens 1001 is similar to the lenses of Fig. 5(a), having an add power region 1007 that spans approximately 25% of the area of the annular region 1003 and is confined to a single quadrant.
However, the optic zone 1002 also includes a second concentric annular region 1003'. The second annular region comprises a second add power region 1007' that is similar to the add power region of Fig. 4(b), and spans a different quadrant to the first annular region 1003. The add power of the second add power region 1007' is the same as that of the first add power region 1007. The concentric annular regions 1003, 1003' are separated by an area of the optic zone that has the base power.

In embodiments of the present disclosure (not shown), the optic zone may comprise a plurality of concentric annular regions, with each annular region having an add power region, and with each add power region being confined to the same quadrant or same half of the annular region. In embodiments of the present disclosure, add power regions of concentric annular regions may have different add powers.

It will be appreciated that a wearer may simultaneously wear a right eye lens and a left eye lens. In order to provide add power that will influence light incident on specific regions of the wearer's retinas, it may be beneficial for the wearer to simultaneously wear two different lenses having opposite add-power regions on their left eye and right eye respectively. For example, it may be desirable to provide add power that influences light falling incident on the nasal halves of a wearer's retina. The nasal retina of the wearer's right eye is the left hand side of the retina (from the wearer's perspective), and the nasal retina of the wearer's left eye is the right hand side of the retina (from the wearer's perspective). In order to provide add power that will change the focus of light incident on both nasal retinas, the right eye lens will need to have an add power region spanning the temporal half (the right hand side of the lens from the wearer's perspective) and the left eye lens will need to have a add power region spanning temporal half (the left hand side of the lens from the wearer's perspective). The wearer's brain will receive signals from both the eyes and both regions of the retina, but the binocular neural image that dominates in the cortex will be the image formed from light rays that have not been influenced by the add power region. Therefore at the level of perception, image degradation may be avoided during normal binocular viewing.

## Claims

1. A contact lens for use in preventing or slowing the development or progression of myopia, the lens including:
an optic zone having an optic axis; and
a peripheral zone surrounding the optic zone, the peripheral zone having a variation in thickness configured to control rotation of the lens;
wherein the optic zone comprises:
a central region, the central region having a base power provided by at least one surface having a curvature, the central region thereby focusing light from distant point objects to a distal focal surface, said light forming a blur circle or ellipse as it passes through a proximal focal surface; and
an annular region circumferentially surrounding the central region and including an add power region having an add power provided by at least one surface having a curvature, the add power being 0.5 D or more and the area of the add power region being less than 75% of the area of the annular region;
wherein a series of points defining centres of curvature of the add power region form a segment of an annulus, the add power region thereby focusing light from distant point objects to form a focused arc at the proximal focal surface.

2. A contact lens according to claim 1, wherein the area of the add power region is less than 50% of the area of the annular region.

3. A contact lens according to claim 1, wherein the add power region is a continuous region having an area that is approximately 50% of the area of the annular region.

4. A contact lens according to claim 1, wherein the area of the add power region is less than 25% of the area of the annular region.

5. A contact lens according to claim 1 or claim 4, wherein the variation in thickness of the peripheral zone is symmetric about a lens diameter, wherein the lens diameter divides the annular region into two halves, and wherein the add power region is confined to one half of the annular region.

6. A contact lens according to claim 5, wherein each half of the annular region is divided into an upper quadrant and a lower quadrant, and wherein the add power region is confined to a single quadrant.

7. A contact lens according to any preceding claim, wherein the add power region has a curvature providing an add power of 5.0 D or more.

8. A contact lens according to any preceding claim, wherein annular region further comprises a lower add power region having a curvature providing an add power of between 0 D and 5.0 D.

9. A contact lens according to any preceding claim, wherein the annular region further comprises a base power region, having the curvature providing the base power and centred on the centre of curvature of the central region.

10. A contact lens according to claim 9 wherein at least 25% of the area of the annular region has the base power.

11. A contact lens according to claim 9, wherein the add power region spans the inferior half of the lens and the base power region spans the remaining half of the lens.

12. A contact lens according to any preceding claim, wherein the add power region is a continuous region having an area that is approximately 50% of the area of the annular region, and the area of the base power region is a continuous region having an area that is approximately 50% of the annular region.

13. A contact lens according to any preceding claim, wherein the add power region has an asymmetric power profile.

14. A contact lens according to claim 8, wherein the lower add power region has an asymmetric power profile.

15. A contact lens according any preceding claim, wherein the annular region has a substantially circular outer circumference.

16. The contact lens according to any preceding claim, wherein the central region is substantially circular in shape and has a diameter of between 2 and 7 mm.

17. The contact lens according to any preceding claim, wherein the annular region extends radially outwards from a perimeter of the central region by between 0.5 and 1.5 mm.

18. The contact lens according to any preceding claim, wherein the base power is between 0.5 D and -15.0 D.

19. The contact lens according to any preceding claim, wherein the lens comprises an elastomer material, a silicone elastomer material, a hydrogel material, or a silicone hydrogel material, or mixtures thereof.

20. The method of manufacturing a contact lens, the method comprising:
forming a contact lens, the lens including an optic zone and a peripheral zone surrounding the optic zone, the peripheral zone having a variation in thickness configured to control rotation of the lens, the optic zone comprising:
wherein the optic zone comprises:
a central region, the central region having a base power provided by at least one surface having a curvature, the central region thereby focusing light from distant point objects to a distal focal surface, said light forming a blur circle or ellipse as it passes through a proximal focal surface; and
an annular region circumferentially surrounding the central region and including an add power region having an add power provided by at least one surface having a curvature, the add power being 0.5 D or more and the area of the add power region being less than 75% of the area of the annular region;
wherein a series of points defining centres of curvature of the add power region form a segment of an annulus, the add power region thereby focusing light from distant point objects to form a focused arc at the proximal focal surface.

## Patentansprüche

1. Kontaktlinse zur Verwendung zur Prävention oder Verlangsamung der Entwicklung oder des Fortschreitens von Myopie, wobei die Linse umfasst:
eine optische Zone mit einer optischen Achse; und
eine periphere Zone, die die optische Zone umgibt, wobei die periphere Zone eine Variation der Dicke aufweist, die so konfiguriert ist, dass sie die Rotation der Linse steuert;
wobei die optische Zone umfasst:
einen zentralen Bereich, wobei der zentrale Bereich eine Basisstärke aufweist, die durch mindestens eine Oberfläche mit einer Krümmung bereitgestellt wird, wodurch der zentrale Bereich Licht von entfernten Punktobjekten auf eine distale Brennfläche fokussiert, wobei dieses Licht einen Unschärfekreis oder -ellipse bildet, wenn es durch eine proximale Brennfläche hindurchdringt; und
einen ringförmigen Bereich, der den zentralen Bereich umlaufend umgibt und einen Bereich mit Additionswert enthält, der einen Additionswert aufweist, der durch mindestens eine Oberfläche mit einer Krümmung bereitgestellt wird, wobei der Additionswert 0,5 D oder mehr beträgt und die Fläche des Bereichs mit Additionswert weniger als 75 % der Fläche des ringförmigen Bereichs beträgt;
wobei eine Reihe von Punkten, die Krümmungsmittelpunkte des Bereichs mit Additionswert definieren, ein Segment eines Rings bilden, wodurch der Bereich mit Additionswert Licht von entfernten Punktobjekten fokussiert, um einen fokussierten Bogen an der proximalen Brennfläche zu bilden.

2. Kontaktlinse nach Anspruch 1, wobei die Fläche des Bereichs mit Additionswert weniger als 50 % der Fläche des ringförmigen Bereichs beträgt.

3. Kontaktlinse nach Anspruch 1, wobei der Bereich mit Additionswert ein kontinuierlicher Bereich mit einer Fläche ist, die etwa 50 % der Fläche des ringförmigen Bereichs beträgt.

4. Kontaktlinse nach Anspruch 1, wobei die Fläche des Bereichs mit Additionswert weniger als 25 % der Fläche des ringförmigen Bereichs beträgt.

5. Kontaktlinse nach Anspruch 1 oder 4, wobei die Variation der Dicke der Randzone symmetrisch um einem Linsendurchmesser ist, wobei der Linsendurchmesser den ringförmigen Bereich in zwei Hälften unterteilt, und wobei der Bereich mit Additionswert auf eine Hälfte des ringförmigen Bereichs beschränkt ist.

6. Kontaktlinse nach Anspruch 5, wobei jede Hälfte des ringförmigen Bereichs in einen oberen Quadranten und einen unteren Quadranten unterteilt ist, und wobei der Bereich mit Additionswert auf einen einzigen Quadranten beschränkt ist.

7. Kontaktlinse nach einem der vorhergehenden Ansprüche, wobei der der Bereich mit Additionswert eine Krümmung aufweist, die einen Additionswert von 5,0 D oder mehr bereitstellt.

8. Kontaktlinse nach einem der vorhergehenden Ansprüche, wobei der ringförmige Bereich ferner einen Bereich mit einem geringeren Additionswert mit einer Krümmung aufweist, die einen Additionswert zwischen 0 D und 5,0 D bereitstellt.

9. Kontaktlinse nach einem der vorhergehenden Ansprüche, wobei der ringförmige Bereich ferner einen Basisstärkenbereich umfasst, dessen Krümmung die Basisstärke bereitstellt und auf den Krümmungsmittelpunkt des zentralen Bereichs zentriert ist.

10. Kontaktlinse nach Anspruch 9, bei der mindestens 25 % der Fläche des ringförmigen Bereichs die Basisstärke aufweisen.

11. Kontaktlinse nach Anspruch 9, wobei der sich Bereich mit Additionswert über die untere Hälfte der Linse und der Bereich mit Basisstärke über die übrige Hälfte der Linse erstreckt.

12. Kontaktlinse nach einem der vorhergehenden Ansprüche, wobei der Bereich mit Additionswert ein kontinuierlicher Bereich mit einer Fläche ist, die ungefähr 50 % der Fläche des ringförmigen Bereichs beträgt, und die Fläche des Bereichs mit Basisstärke ein kontinuierlicher Bereich mit einer Fläche ist, die ungefähr 50 % des ringförmigen Bereichs beträgt.

13. Kontaktlinse nach einem der vorhergehenden Ansprüche, wobei der Bereich mit Additionswert ein asymmetrisches Stärkeprofil aufweist.

14. Kontaktlinse nach Anspruch 8, wobei der Bereich mit einem geringeren Additionswert ein asymmetrisches Stärkeprofil aufweist.

15. Kontaktlinse nach einem der vorhergehenden Ansprüche, wobei der ringförmige Bereich einen im Wesentlichen kreisförmigen Außenumfang aufweist.

16. Kontaktlinse nach einem der vorhergehenden Ansprüche, wobei der zentrale Bereich im Wesentlichen kreisförmig ist und einen Durchmesser zwischen 2 und 7 mm hat.

17. Kontaktlinse nach einem der vorhergehenden Ansprüche, wobei sich der ringförmige Bereich von einem Umfang des zentralen Bereichs radial nach außen um zwischen 0,5 und 1,5 mm erstreckt.

18. Die Kontaktlinse nach einem der vorhergehenden Ansprüche, wobei die Basisstärke zwischen 0,5 D und -15,0 D liegt.

19. Kontaktlinse nach einem der vorangehenden Ansprüche, wobei die Linse ein Elastomermaterial, ein Silikonelastomermaterial, ein Hydrogelmaterial oder ein Silikonhydrogelmaterial oder Mischungen daraus enthält.

20. Verfahren zur Herstellung einer Kontaktlinse, wobei das Verfahren umfasst:
Formen einer Kontaktlinse, wobei die Linse eine optische Zone und eine periphere Zone, die die optische Zone umgibt, umfasst, wobei die periphere Zone eine Variation in der Dicke aufweist, die konfiguriert ist, um die Rotation der Linse zu steuern,
wobei die optische Zone umfasst:
e inen zentralen Bereich, wobei der zentrale Bereich eine Basisstärke aufweist, die durch mindestens eine Oberfläche mit einer Krümmung bereitgestellt wird, wodurch der zentrale Bereich Licht von entfernten Punktobjekten auf eine distale Brennfläche fokussiert, wobei dieses Licht einen Unschärfekreis oder -ellipse bildet, wenn es durch eine proximale Brennfläche hindurchdringt; und
e inen ringförmigen Bereich, der den zentralen Bereich umlaufend umgibt und einen Bereich mit Additionswert enthält, der einen Additionswert aufweist, der durch mindestens eine Oberfläche mit einer Krümmung bereitgestellt wird, wobei der Additionswert 0,5 D oder mehr beträgt und die Fläche des Bereichs mit Additionswert weniger als 75 % der Fläche des ringförmigen Bereichs beträgt;
wobei eine Reihe von Punkten, die Krümmungsmittelpunkte des Bereichs mit Additionswert definieren, ein Segment eines Rings bilden, wodurch der Bereich mit Additionswert Licht von entfernten Punktobjekten fokussiert, um einen fokussierten Bogen an der proximalen Brennfläche zu bilden.

## Revendications

1. Lentille de contact pour utilisation dans la prévention ou le ralentissement du développement ou de la progression de la myopie, la lentille incluant :
une zone optique ayant un axe optique ; et
une zone périphérique entourant la zone optique, la zone périphérique présentant une variation d'épaisseur configurée pour commander une rotation de la lentille ;
dans laquelle la zone optique comprend :
une région centrale, la région centrale ayant une puissance de base fournie par au moins une surface ayant une courbure, la région centrale focalisant de ce fait la lumière issue d'objets ponctuels distants vers une surface focale distale, ladite lumière formant un cercle lumineux ou une ellipse lumineuse lorsqu'elle traverse une surface focale proximale ; et
une région annulaire entourant circonférentiellement la région centrale et incluant une région de puissance d'addition ayant une puissance d'addition fournie par au moins une surface ayant une courbure, la puissance d'addition étant de 0,5 D ou plus et l'aire de la région de puissance d'addition étant inférieure à 75 % de l'aire de la région annulaire ;
dans laquelle une série de points définissant des centres de courbure de la région de puissance d'addition forme un segment d'un anneau, la région de puissance d'addition focalisant de ce fait la lumière issue d'objets ponctuels distants pour former un arc focalisé au niveau de la surface focale proximale.

2. Lentille de contact selon la revendication 1, dans laquelle l'aire de la région de puissance d'addition est inférieure à 50 % de l'aire de la région annulaire.

3. Lentille de contact selon la revendication 1, dans laquelle la région de puissance d'addition est une région continue dont l'aire est approximativement égale à 50 % de l'aire de la région annulaire.

4. Lentille de contact selon la revendication 1, dans laquelle l'aire de la région de puissance d'addition est inférieure à 25 % de l'aire de la région annulaire.

5. Lentille de contact selon la revendication 1 ou la revendication 4, dans laquelle la variation d'épaisseur de la zone périphérique est symétrique selon un diamètre de lentille, dans laquelle le diamètre de lentille divise la région annulaire en deux moitiés, et dans laquelle la région de puissance d'addition est confinée à une moitié de la région annulaire.

6. Lentille de contact selon la revendication 5, dans laquelle chaque moitié de la région annulaire est divisée en un quadrant supérieur et un quadrant inférieur, et dans laquelle la région de puissance d'addition est confinée à un seul quadrant.

7. Lentille de contact selon l'une quelconque des revendications précédentes, dans laquelle la région de puissance d'addition présente une courbure fournissant une puissance d'addition de 5,0 D ou plus.

8. Lentille de contact selon l'une quelconque des revendications précédentes, dans laquelle la région annulaire comprend en outre une région de puissance d'addition inférieure ayant une courbure fournissant une puissance d'addition comprise entre 0 D et 5,0 D.

9. Lentille de contact selon l'une quelconque des revendications précédentes, dans laquelle la région annulaire comprend en outre une région de puissance de base, ayant la courbure fournissant la puissance de base et centrée sur le centre de courbure de la région centrale.

10. Lentille de contact selon la revendication 9, dans laquelle au moins 25 % de l'aire de la région annulaire a la puissance de base.

11. Lentille de contact selon la revendication 9, dans laquelle la région de puissance d'addition couvre la moitié inférieure de la lentille et la région de puissance de base couvre la moitié restante de la lentille.

12. Lentille de contact selon l'une quelconque des revendications précédentes, dans laquelle la région de puissance d'addition est une région continue dont l'aire est approximativement égale à 50 % de l'aire de la région annulaire, et l'aire de la région de puissance de base est une région continue dont l'aire est approximativement égale à 50 % de la région annulaire.

13. Lentille de contact selon l'une quelconque des revendications précédentes, dans laquelle la région de puissance d'addition présente un profil de puissance asymétrique.

14. Lentille de contact selon la revendication 8, dans laquelle la région de puissance d'addition inférieure présente un profil de puissance asymétrique.

15. Lentille de contact selon l'une quelconque des revendications précédentes, dans laquelle la région annulaire a une circonférence externe sensiblement circulaire.

16. Lentille de contact selon l'une quelconque des revendications précédentes, dans laquelle la région centrale est sensiblement de forme circulaire et a un diamètre compris entre 2 et 7 mm.

17. Lentille de contact selon l'une quelconque des revendications précédentes, dans laquelle la région annulaire s'étend radialement vers l'extérieur depuis un périmètre de la région centrale sur 0,5 à 1,5 mm.

18. Lentille de contact selon l'une quelconque des revendications précédentes, dans laquelle la puissance de base est comprise entre 0,5 D et -15,0 D.

19. Lentille de contact selon l'une quelconque des revendications précédentes, dans laquelle la lentille comprend un matériau élastomère, un matériau élastomère de silicone, un matériau hydrogel, ou un matériau hydrogel de silicone, ou des mélanges de ceux-ci.

20. Procédé de fabrication d'une lentille de contact, le procédé comprenant :
la formation d'une lentille de contact, la lentille incluant une zone optique et une zone périphérique entourant la zone optique, la zone périphérique présentant une variation d'épaisseur configurée pour commander une rotation de la lentille, la zone optique comprenant :
une région centrale, la région centrale ayant une puissance de base fournie par au moins une surface ayant une courbure, la région centrale focalisant de ce fait la lumière issue d'objets ponctuels distants vers une surface focale distale, ladite lumière formant un cercle lumineux ou une ellipse lumineuse lorsqu'elle traverse une surface focale proximale ; et
une région annulaire entourant circonférentiellement la région centrale et incluant une région de puissance d'addition ayant une puissance d'addition fournie par au moins une surface ayant une courbure, la puissance d'addition étant de 0,5 D ou plus et l'aire de la région de puissance d'addition étant inférieure à 75 % de l'aire focale proximale ;
dans laquelle une série de points définissant des centres de courbure de la région de puissance d'addition forment un segment d'un anneau, la région de puissance d'addition focalisant de ce fait la lumière issue d'objets ponctuels distants pour former un arc focalisé au niveau de la surface focale proximale.
